**Europäisches Patentamt**

(19) **European Patent Office**

**Office européen des brevets**

(11) Veröffentlichungsnummer: **0 126 851**
**A2**

(12) # EUROPÄISCHE PATENTANMELDUNG

(21) Anmeldenummer: **84102018.3**

(22) Anmeldetag: **27.02.84**

(51) Int. Cl.³: **B 23 B 31/30**

(30) Priorität: **27.05.83 DE 3319228**

(43) Veröffentlichungstag der Anmeldung:
**05.12.84 Patentblatt 84/49**

(84) Benannte Vertragsstaaten:
**AT CH DE FR GB IT LI SE**

(71) Anmelder: **SMW Schneider & Weisshaupt GmbH**
**Wiesentalstrasse 28**
**D-7996 Meckenbeuren(DE)**

(72) Erfinder: **Hiestand, Karl**
**Mühlweg 2**
**D-7798 Pfullendorf(DE)**

(74) Vertreter: **Engelhardt, Guido, Dipl.-Ing.**
**Montafonstrasse 35 Postfach 1350**
**D-7990 Friedrichshafen 1(DE)**

(54) **Druckmittelzuführung für Spannfutter.**

(57) Bei einer Druckmittelübertragung für Spannfutter (1) mittels eines in einem mit geringem Abstand angeordneten Zuführungsringes (21) eingesetzten Dichtringes (31), der im Durchmesser elastisch verformbar und im unbelasteten Zustand von der Umfangsfläche (18) des Futterkörpers (2) frei ist, ist der Dichtring (31) auf einem rechteckigen formstabilen Profilkörper (31), in dem durchströmbare Kanläle (35) vorgesehen sind, und aus an diesem angeformten radial federnden an dem Zuführungsring (21) abgestützten Stegen (33, 34) gebildet. Außerdem liegt der Dichtring (31) im unbelasteten Zustand unter Vorspannung an dem Zuführungsring (21) an und die beaufschlagbare äußere Stirnfläche (37) des Dichtringes (31) ist größer bemessen als dessen bei einer Druckmittelübertragung beaufschlagte innere Stirnfläche (38).

Durch diese Ausgestaltung ist in kurzer Zeit eine große Menge Druckmedium in das Spannfutter (1) zu übertragen, auch hebt sich der Dichtring (31) schlagartig von dem Futterkörper (2) ab.

FIG. 1

**DIPL.-ING. GUIDO ENGELHARDT   PATENTANWALT 26851**

**7990 Friedrichshafen**

S M W
Schneider & Weißhaupt GmbH

7996 Meckenbeuren

## Druckmittelzuführung für Spannfutter

Die Erfindung bezieht sich auf eine Druckmittelzuführung für Spannfutter oder dgl. mit einer druckdichten Verbindung für die radiale Übertragung des Druckmittels von einem feststehenden Zuführungsring zu zeitweise umlaufende Teile des Spannfutters, wobei in den auf der Umfangsfläche des Spannfutters mit geringem Abstand zu diesem angeordneten Zuführungsring ein ringförmig ausgebildeter Dichtring eingesetzt ist, der in seinem Durchmesser elastisch verformbar und im unbelasteten Zustand von der Umfangsfläche des Spannfutters frei ist.

Eine Druckmittelzuführung dieser Art ist durch die DE-PS 1 6o2 813 bekannt und hat sich in der Praxis seit Jahren außerordentlich  gut bewährt. Der hierbei verwendete in seinem Durchmesser elastisch verformbare Dichtring ist mit wenigstens einer als Drossel ausgebildeten Durchtrittsöffnung versehen und wird unter Vorspannung in der Ringnut

./.

des Zuführungsringes eingesetzt; bei einer Druckmittelübertragung ist somit, um die Verformung und Anlage des Dichtringes an der Umfangsfläche des Futterkörpers zu bewirken, zunächst in dem äußeren Bereich der Ringnut ein bestimmter Druck aufzubauen. Dabei ist auch eine hohe Reibungskraft, da der Dichtring seitlich unter Vorspannung an der Ringnut anliegt, zu überwinden. Die Zeit, die für einen Spannvorgang erforderlich ist, wird dadurch verlängert. Des weiteren hat sich gezeigt, daß der Dichtring, da die bei einer Druckmittelübertragung beaufschlagten inneren und äußeren Stirnflächen nahezu gleich bemessen sind und somit ein Druckausgleich stattfindet, mitunter teilweise von der Umfangsfläche des Futterkörpers kurzzeitig abgehoben wird. Infolge dessen kann das Druckmedium seitlich abströmen und während dieser Zeit ist ein Druckverlust in Kauf zu nehmen. Auch können unter dem abgehobenen Dichtring hindurch Kühlwasser und/oder Späne in die diesen aufnehmende Ringnut und bei einer nachfolgenden Druckmittelübertragung auch in das Spannfutter gelangen und Betriebsstörungen hervorrufen. Und da der Dichtring aufgrund der Materialverteilung und der Einspannung in der Ringnut in der Mitte stärker verformt wird als in den beiden äußeren Bereichen und dabei einen Buckel bildet, liegt dieser bei einer Druckmittelübertragung oftmals nicht flächig auf dem Futterkörper auf. Dies kann ebenfalls zu einer Beeinträchtigung der Druckmittelzuführung führen. Ferner ist ein einwandfreies Abheben des Dichtringes insbesondere bei Spannfuttern mit großen Außendurchmessern aufgrund des hohen Eigengewichtes des Dichtringes und der großen seitlichen Reibung in der Ringnut des Zuführungsringes oftmals nicht gegeben.

./.

Aufgabe der Erfindung ist es daher, eine Druckmittelzuführung für Spannfutter der vorgenannten Art zu schaffen, die nicht nur sehr schnell betriebsbereit ist, so daß die zum Spannen eines Werkstückes notwendigen Zeiten kurz gehalten werden können, sondern bei der auch zuverlässig ausgeschlossen ist, daß der Dichtring während einer Druckmittelübertragung von der Umfangsfläche des Futterkörpers abgehoben wird. Der Dichtring soll vielmehr rasch und fest, ohne daß sich in der Mitte ein Buckel bildet, auf der Umfangsfläche zur Anlage kommen. Auch soll sich dieser nach Beendigung einer Druckmittelübertragung schlagartig selbsttätig in einem ausreichenden Maße zurückstellen. Des weiteren soll das Eindringen von Kühlwasser und/oder Spänen durch die Druckmittel-Durchtrittsöffnungen in die Ringnut vermieden werden, vor allem aber soll gewährleistet sein, daß bei einer Druckmittelübertragung das Druckmedium in großer Menge nahezu ungehindert den Dichtring durchströmen kann, so daß der Druckaufbau in dem Druckraum des Futterkörpers in kurzer Zeit erfolgen kann. Auch soll das entspannte Druckmedium über einen großen Ringspalt zwischen der Umfangsfläche des Futterkörpers und dem Zuführungsring rasch abströmen können.

Gemäß der Erfindung wird dies bei einer Druckmittelzuführung für Spannfutter dadurch erreicht, daß der Dichtring aus einem rechteckigen, formstabilen Profilkörper, in dem eine oder mehrere von dem Druckmittel durchströmbare Kanäle vorgesehen sind, und aus an den beiden senkrecht zur Längsachse des Spannfutters verlaufenden Flächen etwa in deren Mitte angeformten Stegen gebildet ist, die radial federnd ausgebildet und an dem Zuführungsring abgestützt sind, daß der Dichtring im unbelasteten Zustand

./.

zum Abschluß der in diesem vorgesehenen Kanäle unmittelbar oder über Zwischenglieder unter Vorspannung an der Innenmantelfläche der diesen aufnehmenden in den Zuführungsring eingearbeiteten Ringnut dichtend anliegt und daß die von dem Druckmittel beaufschlagbare achsparallele äußere Stirnfläche des Dichtringes größer bemessen ist als die bei einer Druckmittelübertragung beaufschlagte innere Stirnfläche.

Sehr zweckmäßig ist es hierbei, den Zuführungsring mit sich in Achsrichtung des Spannfutters erstreckenden Aussparungen zur Aufnahme der an dem Profilkörper angeformten Stege zu versehen, wobei diese unter Vorspannung in die Aussparungen des Zuführungsringes eingesetzt werden sollte.

Angebracht ist es ferner, zur Erhöhung der Elastizität der an dem Profilkörper angeformten Stege in diesen ein- oder beiderseits der Stege in deren Anschlußbereich einen Einstich einzuarbeiten.

Um bei einer Druckmittelübertragung eine druckdichte Anlage der Stege zu gewährleisten, sollten des weiteren die diese abstützenden Anlageflächen der Aussparungen gegenüber der Achsrichtung des Spannfutters zueinander zur Mitte geneigt verlaufend, beispielsweise unter einem Winkel $\alpha$ von $30^{\circ}$, ausgebildet sein.

Damit in kurzer Zeit eine sichere Anlage des Dichtringes an der Umfangsfläche des Futterkörpers sichergestellt ist, sollte dessen äußere Stirnfläche etwa um das 1,5 - 4-fache größer bemessen sein als die bei einer Druckmittelübertragung beaufschlagte innere Stirnfläche.

Um auf einfache Weise eine große von Druckmittel beaufschlagbare äußere Stirnfläche zu schaffen, können bei einer Druckmittelübertragung die die Stege des Dichtringes aufnehmenden Aussparungen des Zuführungsringes in ihrem äußeren Bereich mit dem in diesen eingearbeiteten Druckmittelzuführungskanal verbunden werden.

Dies ist leicht dadurch zu bewerkstelligen, daß die den Dichtring aufnehmende in den Zuführungsring eingearbeitete Ringnut in ihrem Querschnitt T-förmig ausgebildet ist, wobei in deren achssenkrechten Teil der Profilkörper mit seinem radial inneren Teil und in deren achsparallelen Teil der Profilkörper mit dem radial äußeren Teil und die angeformten Stege angeordnet sind.

Die bei einer Druckmittelübertragung beaufschlagte innere Stirnfläche des Dichtringes kann aber auch verkleinert werden, in dem an diesem und/oder der Umfangsfläche des Futterkörpers beiderseits neben der in diesen eingearbeiteten Aufnahmenut radial gerichtete Nocken vorgesehen werden und/oder daß der Dichtring mit in Achsrichtung des Spannfutters verlaufenden Freisparungen versehen wird.

Vorteilhaft ist es ferner, um Verkantungen auszuschließen, den Dichtring mit dem radial inneren Teil des Profilkörpers in dem Zuführungsring verschiebbar zu führen.

Nach einer andersartigen Ausgestaltung können auch in den Dichtring eine oder mehrere jeweils mit einem von dem Druckmittel durchströmten Kanal versehene Buchsen eingesetzt werden, die im unbelasteten Zustand an der Innenmantelfläche der diese aufnehmenden Ringnut anliegen und mittels eines angeformten Bundes den Dichtring mit geringem Abstand zu dieser halten.

./.

Die gemäß der Erfindung ausgebildete Druckmittelzuführung für Spannfutter ist nicht nur einfach in der konstruktiven Ausgestaltung und somit auf wirtschaftliche Weise herstellbar, sondern diese ermöglicht vor allem eine stets betriebssichere Druckmittelübertragung. Wird nämlich der Dichtring aus einem formstabilen mit durchströmbaren Kanälen versehenen Profilkörper und von diesem seitlich abstehenden federnden Stegen gebildet und liegt dieser unter Vorspannung an der Innenmantelfläche der Ringnut an, wobei dessen äußere beaufschlagbare Stirnfläche größer bemessen ist als die innere Stirnfläche, so ist gewährleistet, daß der Dichtring bei einer Druckmittelübertragung sofort mit großer Kraft auf die Umfangsfläche des Futterkörpers gepreßt wird, daß aber dennoch das Druckmittel nahezu ungehindert durch die in den Profilkörper eingearbeiteten Kanäle diesen durchströmen kann. Da die von dem Druckmittel beaufschlagbare äußere Stirnfläche des Dichtringes verhältnismäßig groß bemessen, die zu überwindende Vorspannkraft der Stege aber gering ist, ist es somit nicht erforderlich, die Kanäle als Drosseln auszubilden und einen Druck aufzubauen, der Dichtring wird vielmehr durch das diesen beaufschlagende zuströmende Druckmedium sofort verformt und legt sich flächig auf den Futterkörper auf, ohne daß der Profilkörper einen Buckel bildet.

Der zur Vornahme eines Spannvorganges notwendige Zeitaufwand wird dadurch erheblich reduziert, zumal durch die Kanäle auch eine große Menge Druckmedium zu fördern und der Druckaufbau in dem Druckraum des Spannfutters somit rasch vorzunehmen ist. Des weiteren ist sichergestellt, daß sich der formstabile Profilkörper des Dichtringes bei einer Druckübertragung nicht, und zwar auch nicht

./.

teilweise von dem Futterkörper abhebt. Bei Beendigung einer Druckmittelübertragung wird dagegen der Dichtring selbsttätig sofort in seine Ausgangslage zurückgeführt, das entspannte Medium kann ungehindert durch den Ringspalt zwischen dem Futterkörper und dem Zuführungsring abströmen, auch kann der Dichtring durch den rotierenden Futterkörper nicht beschädigt werden. Des weiteren kann sich kein Schmiermittel hinter dem Dichtring, da dieser an der Innenmantelfläche der diesen aufnehmenden Ringnut anliegt, sammeln und auf diese Weise in die Druckmittelkanäle und den Futterkörpern gelangen. Durch die erfindungsgemäße Ausgestaltung wird somit ein störungsfreier Betrieb über einen langen Zeitraum ermöglicht.

In der Zeichnung ist ein Ausführungsbeispiel einer gemäß der Erfindung ausgebildeten Druckmittelzuführung für Spannfutter dargestellt und nachfolgend im einzelnen erläutert. Hierbei zeigen:

Fig. 1    ein kraftbetätigtes mit einer Druckmittelzuführung versehenes Spannfutter im Axialschnitt,

Fig. 2    das Spannfutter nach Fig. 1 mit einem andersartig gestalteten Übergangsbereich,

Fig. 3    das Spannfutter nach Fig. 1 in zwei unterschiedlichen achssenkrechten Schnitten und einer weiteren Gestaltungsvariante Dichtringes    und

Fig. 4    den bei dem Spannfutter nach Fig. 1 vorgesehenen Dichtring im Schnitt.

./.

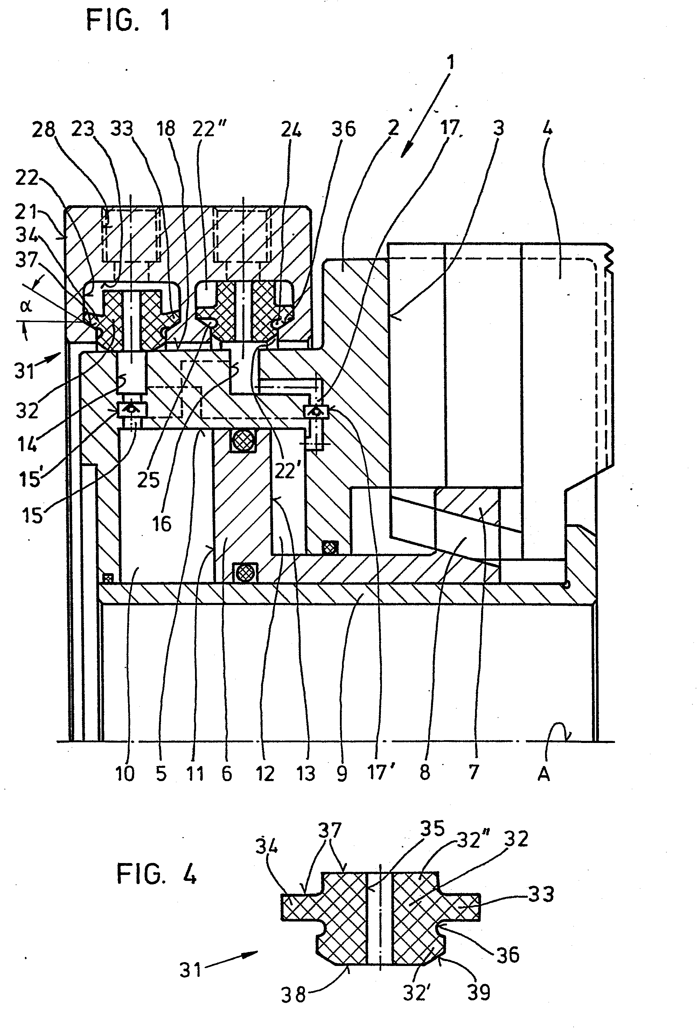

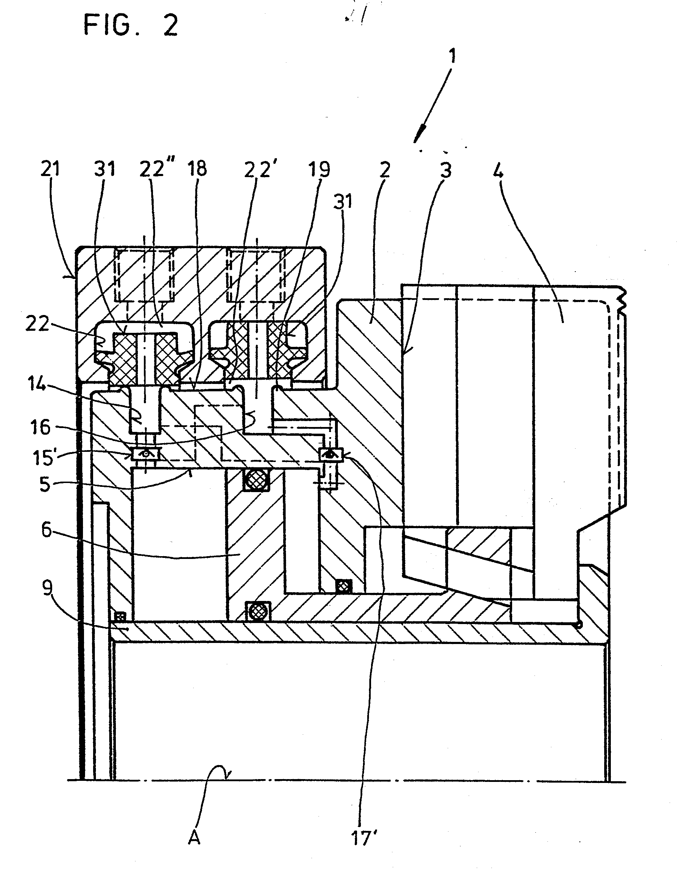

Das in den Fig. 1 und 2 dargestellte und jeweils mit 1 bezeichnete kraftbetätigte Spannfutter besteht im wesentlichen aus einem Futterkörper 2, den in diesen in radial gerichteten Nuten 3 verschiebbar eingesetzten Grund- oder Spannbacken 4 sowie einem ringförmigen Kolben 6, der in Achsrichtung A des Spannfutters 1 verschiebbar in einem Zylinderraum 5 eingesetzt und über angeformte Keilhaken 8 mit an den Backen 4 vorgesehenen Keilhaken 7 mit diesen formschlüssig verbunden ist. Der in dem Futterkörper 2 vorgesehene Zylinderraum 5, der durch den Kolben 4 in die beiden Druckräume 1o und 12 unterteilt ist, sowie die Nuten 3 sind innen durch eine Büchse 9 verschlossen.

Den Druckräumen 1o und 12 wird Druckmittel über in die Umfangsfläche 18 des Futterkörpers 2 eingearbeitete Ringnuten 14 bzw. 16 sowie sich an diese anschließende Kanäle 15 und 17 zugeführt. Ist die dem Druckraum 1o zugeordnete Druckfläche 11 des Kolbens 6 beaufschlagt, so wird dieser nach rechts verschoben und die Backen 4 werden, da die axiale Verstellbewegung mittels der Keilhaken 7 und 8 in eine radiale Bewegung umgelenkt wird, nach außen gedrückt, bei einer Beaufschlagung der dem Druckraum 12 zugeordneten Druckflächen 13 des Kolbens 6 werden dagegen die Backen 4 nach innen gezogen. Um in den Druckräumen 1o bzw. 12 nach einer Druckmittelübertragung den aufgebauten Druck aufrechtzuerhalten, sind in die Kanäle 15 und 17 schematisch dargestellte entsperrbare Rückschlagventile 15' bzw. 17' eingesetzt.

./.

Damit Druckmittel in die Ringnut 14 oder in die Ringnut 16 strömen kann, ist ein den Futterkörper 2 umgebender feststehender Zuführungsring 21 vorgesehen,
in den in zwei Ringnuten 22 durch das Druckmittel
radial verformbare Dichtringe 31 eingesetzt sind. Die
Dichtringe 31 bestehen jeweils, wie dies im einzelnen
auch der Fig. 4 entnommen werden kann, aus einem rechteckigen formstabilen Profilkörper 32 und seitlich an
diesem etwa mittig angeformten federnden Stegen 33 und 34,
die in in den Zuführungsring 21 eingearbeitete Aussparungen
24 und 25 eingreifen und an diesem abgestützt sind. Der
Dichtring 31 ist, wie dies in der rechten Hälfte des Zuführungsringes 21 in Fig. 1 dargestellt ist, mit geringer
Vorspannung in die T-förmig gestalteten Ringnuten 22 eingesetzt, so daß sie im unbelasteten Zustand an den Innenmantelflächen 23 anliegen.

Die in die Dichtringe 31 eingearbeiteten von dem Druckmittel durchströmbaren Kanäle 35 sind nicht als Drosselbohrungen ausgebildet, sondern dieses kann nahezu ungehindert durch die Kanäle 35 hindurchströmen. Vielmehr ist
die bei einer Druckmittelübertragung von dem Druckmittel
beaufschlagbare äußere Stirnfläche 37 des Dichtringes 31
etwa um das dreifache größer bemessen als dessen innere
Stirnfläche 38, so daß der Dichtring 31 bei einer Beaufschlagung sich sofort auf der Umfangsfläche 18 des
Futterkörpers 2 dichtend auflegt. Dabei wird der Dichtring 31, der mit dem inneren Teil 32' des Profilkörpers
32 in dem achssenkrechten Teil 22' der T-förmig gestalteten Ringnut 22 verschiebbar beführt ist, nach innen
verschoben und die federnden Stege 33 und 34 legen sich
gemäß der Darstellung in der linken Hälfte des Zuführungsringes 21 an den unter einem Winkel $\alpha$ von ca. 30°

./.

geneigten Anlageflächen 36 und 37 der Aussparungen 24 und 25 dichtend an. Somit kann auch seitlich kein Druckmedkum, das über in die Anschlußbohrungen 28 eingeschraubte Schlauchleitungen zugeführt wird, an dem Dichtring 31 vorbeiströmen. Um die Elastizität der Dichtringe 31 in radialer Richtung zu erhöhen, sind in den Profilkörper 32 Einschnitte 36 eingearbeitet.

Dadurch, daß die Ringnuten 22 T-förmig ausgebildet und in deren waagrechten Teil 22'' der äußere Teil 32'' des Profilkörpers 32 sowie die Stege 33 und 34 angeordnet sind, ist eine große von Druckmittel beaufschlagbare äußere Stirnfläche 37 geschaffen. Sobald nämlich der Formkörper 32 von der Innenmantelfläche 23 des Zuführungsringes 21 durch das einströmende Druckmittel weggedrückt wird, werden auch die äußeren Flächen der Stege 33 und 34 beaufschlagt. Der Dichtring 31 wird somit in kurzer Zeit radial nach innen geschoben und fest gegen die Umfangsfläche 18 des Futterkörpers 2 gepreßt, so eine zuverlässige Druckmittelübertragung gewährleistet ist.

Damit die bei einer Druckmittelzuführung beaufschlagte innere Stirnfläche 38 des Dichtringes 31 klein bemessen ist, ist dieser mit seitlich offenen Freisparungen 39 versehen. Auf den Dichtring 31 wirkt somit von innen nur der sich in den Ringnuten 14 bzw. 16 aufbauende Druck ein. Außerdem ist dadurch gewährleistet, daß das entspannte abströmende Druckmedium, sobald eine Druckmittelübertragung beendet ist, rasch über die sich zwischen der Umfangsfläche 18 des Futterkörpers 2 und dem Zuführungsring 21 bildenden Spalte austreten kann.

./.

Zu dem gleichen Zweck können aber auch, wie dies in Fig. 2 dargestellt ist, auf der Umfangsfläche 18 des Futterkörpers 2 seitlich neben den Ringnuten 14 und 16 Nocken 19 vorgesehen werden. Der Dichtring 31' liegt somit bei einer Druckmittelübertragung nur auf den Nocken 19 auf.

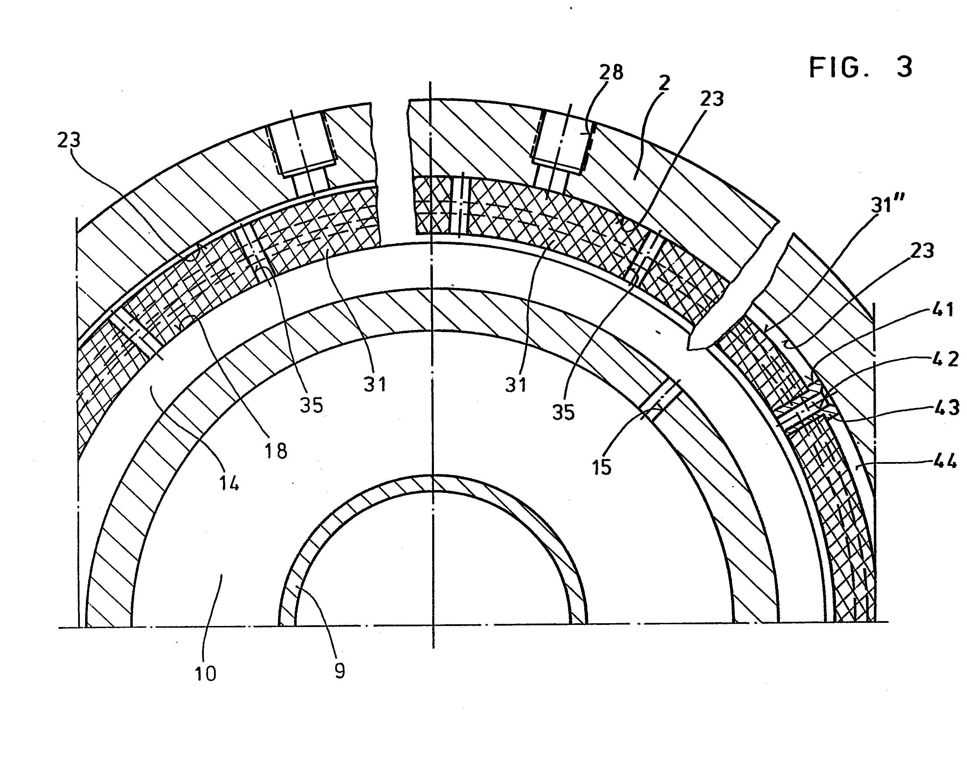

In Fig. 3 ist der Dichtring 31 in den beiden Endlagen dargestellt. Im linken Teil liegt der Dichtring 31 während einer Druckmittelübertragung an der Umfangsfläche 18 des Futterkörpers 2 entsprechend der linken Darstellung in Fig. 1 an, in der Mitte dagegen, wie in der rechten Darstellung der Fig. 1, an der Innenmantelfläche 23 des Zuführungsringes 21.

Im rechten Teil der Fig. 3 ist eine weitere Variante gezeigt, um im äußeren Bereich des Dichtringes 31'' rasch einen Druck aufbauen zu können bzw. ein sofortiges Durchströmen der in diesen eingearbeiteten Kanäle auszuschließen. In den Dichtring 31'' sind hierbei Büchsen 41 eingesetzt, die mit einem von dem Druckmittel durchströmbaren Kanal 42 und einem Bund 43 versehen sind, der durch die Vorspannung des Dichtringes 31'' an der Innenmantelfläche 23 des Zuführungsringes 21 anliegt.

Auf diese Weise sind Kammern 44 geschaffen, in die das Druckmittel einströmen kann. Der Dichtring 31'' wird somit durch das einströmende Druckmittel sofort auf einer großen Fläche beaufschlagt und rasch nach innen zur Anlage an der Umfangsfläche 18 des Futterkörpers 2 verschoben.

26. Mai 1983   e-1
A 7793

S M W
Schneider & Weißhaupt GmbH

7996 Meckenbeuren

P a t e n t a n s p r ü c h e :

1. Druckmittelzuführung für Spannfutter oder dgl. mit
einer druckdichten Verbindung für die radiale Übertragung des Druckmittels von einem feststehenden
Zuführungsring zu zeitweise umlaufende Teile des
Spannfutters, wobei in den auf der Umfangsfläche.
des Spannfutters mit geringem Abstand zu diesem
angeordneten Zuführungsring ein ringförmig ausgebildeter Dichtring eingesetzt ist, der in seinem Durchmesser elastisch verformbar und im unbelasteten
Zustand von der Umfangsfläche des Spannfutters frei
ist,

d a d u r c h   g e k e n n z e i c h n e t ,

daß der Dichtring (31, 31', 31'') aus einem rechteckigen, formstabilden Profilkörper (32), in dem eine
oder mehrere von dem Druckmittel durchströmbare

./.

Kanäle (35) vorgesehen sind, und aus an den beiden senkrecht zur Längsachse (A) des Spannfutters (1) verlaufenden Flächen etwa in deren Mitte angeformten Stegen (33, 34) gebildet ist, die radial federnd ausgebildet und an dem Zuführungsring (21) abgestützt sind, daß der Dichtring (31, 31', 31'') im unbelasteten Zustand zum Abschluß der in diesem vorgesehenen Kanäle (35; 42) unmittelbar oder über Zwischenglieder (Buchse 41) unter Vorspannung an der Innenmantelfläche (23) der diesen aufnehmenden in den Zuführungsring (21) eingearbeiteten Ringnut (22) dichtend anliegt und daß die von dem Druckmittel beaufschlagbare achsparallele äußere Stirnfläche (37) des Dichtringes (31) größer bemessen ist als die bei einer Druckmittelübertragung beaufschlagte innere Stirnfläche (38).

2. Druckmittelzuführung nach Anspruch 1,

d a d u r c h   g e k e n n z e i c h n e t ,

daß der Zuführungsring (21) mit sich in Achsrichtung (A) des Spannfutters (1) erstreckenden Aussparungen (24, 25) zur Aufnahme der an dem Profilkörper (32) angeformten Stege (33, 34) versehen ist.

3. Druckmittelzuführung nach Anspruch 1 oder 2,

d a d u r c h   g e k e n n z e i c h n e t ,

daß die Stege (33, 34) des Dichtringes (31, 31') unter Vorspannung in die diese aufnehmenden Aussparungen (24, 25) des Zuführungsringes (21) eingesetzt sind.

./.

4. Druckmittelzuführung nach einem oder mehreren
der Ansprüche 1 bis 3,

d a d u r c h   g e k e n n z e i c h n e t ,

daß zur Erhöhung der Elastizität der an dem Profilkörper (32) angeformten Stege (33, 34) in diesen
ein- oder beiderseits der Stege (33, 34) in deren
Anschlußbereich ein Einstich (36) eingearbeitet ist.

5. Druckmittelzuführung nach einem oder mehreren
der Ansprüche 1 bis 4,

d a d u r c h   g e k e n n z e i c h n e t ,

daß die die Stege (33, 34) abstützenden Anlageflächen
(36, 37) der Aussparungen (25, 26) gegenüber der Achsrichtung (A) des Spannfutters (1) zueinander zur Mitte
geneigt verlaufend, beispielsweise unter einem Winkel $\alpha$
von $30^{o}$ ausgebildet sind.

6. Druckmittelzuführung nach Anspruch 1,

d a d u r c h   g e k e n n z e i c h n e t ,

daß die von dem Druckmittel beaufschlagbare äußere
Stirnfläche (37) des Dichtringes (31) etwa um das
1,5 - 4-fache größer bemessen ist als die bei einer
Druckmittelübertragung beaufschlagte innere Stirnfläche (38).

./.

7. Druckmittelzuführung nach einem oder mehreren der Ansprüche 1 bis 3,

d a d u r c h   g e k e n n z e i c h n e t ,

daß bei einer Druckmittelübertragung die die Stege (33, 34) des Dichtringes (31) aufnehmenden Aussparungen (24, 25) des Zuführungsringes (21) in ihrem äußeren Bereich mit dem in diesen eingearbeiteten Druckmittelzuführungskanal (28) verbunden sind.

8. Druckmittelzuführung nach Anspruch 7,

d a d u r c h   g e k e n n z e i c h n e t ,

daß die den Dichtring (31, 31') aufnehmende in den Zuführungsring (21) eingearbeitete Ringnut (22) in ihrem Querschnitt T-förmig ausgebildet ist, wobei in deren achssenkrechten Teil (22') der Profilkörper (32) mit seinem radial inneren Teil (32') und in deren achsparallelen Teil (22'') der Profilkörper (32) mit dem radial äußeren Teil (32'') und die angeformten Stege (33, 34) angeordnet sind.

9. Druckmittelzuführung nach einem oder mehreren der Ansprüche 1 bis 8,

d a d u r c h   g e k e n n z e i c h n e t ,

daß zur Verkleinerung der bei einer Druckmittelübertragung beaufschlagten inneren Stirnfläche (38) des Dichtringes (31) an diesem und/oder der Umfangsfläche (18) des Futterkörpers (2) beiderseits neben der in diesen eingearbeiteten Aufnahmenut (14, 16) radial

./.

gerichteten Nocken (19) vorgesehen sind und/oder daß der Dichtring (21) mit in Achsrichtung (A) des Spannfutters (1) verlaufenden Freisparungen (39) versehen ist.

1o. Druckmittelzuführung nach einem oder mehreren der Ansprüche 1 bis 8,

d a d u r c h   g e k e n n z e i c h n e t ,

daß der Dichtring (31) mit dem radial inneren Teil (32') des Profilkörpers (32) in dem Zuführungsring (21) verschiebbar geführt ist.

11. Druckmittelzuführung nach einem oder mehreren der Ansprüche 1 bis 1o,

d a d u r c h   g e k e n n z e i c h n e t ,

daß in den Dichtring (31) eine oder mehrere jeweils mit einem von dem Druckmittel durchströmten Kanal (42) versehene Buchsen (41) eingesetzt sind, die im unbelasteten Zustand an der Innenmantelfläche (23) der diese aufnehmenden Ringnut (22) anliegen und mittels eines angeformten Bundes (43) den Dichtring (32'') mit geringem Abstand zu dieser halten.

13. Mai 1983 \ e-1
A 7793

0126851

FIG. 1

FIG. 4

FIG. 2

0126851

FIG. 3

0126851